# EUROPEAN PATENT SPECIFICATION

(11) **EP 2 502 826 B1**
(45) Date of publication and mention of the grant of the patent: **21.01.2015**
(21) Application number: 12160197.5
(22) Date of filing: 19.03.2012
(51) Int. Cl.: B64C 5/12, B64C 13/00, B64C 27/20, B64C 17/02, B64C 39/00, B64C 39/06, B64C 5/10

(54) **A flying saucer**
Fliegende Untertasse
Soucoupe volante

(30) Priority: 23.03.2011 IT MO20110065
(43) Date of publication of application: 26.09.2012
(73) Proprietor: Universita' Degli Studi Di Modena E Reggio Emilia, 41121 Modena (IT)
(72) Inventor: Madonia, Mauro, 40054 BUDRIO (BOLOGNA) (IT); Anzilotti, Stefano, 42124 REGGIO EMILIA (IT); Trancossi, Michele, 43125 PARMA (IT); Dumas, Antonio, 40121 BOLOGNA (IT); Giuliani, Ilaria, 42023 CADELBOSCO SOPRA (REGGIO EMILIA) (IT)
(74) Representative: Colò, Chiara

(56) References cited:
- GB-A- 2 424 405
- GB-A- 191 217 253
- US-A- 2 342 548
- US-A- 2 997 254
- US-A- 3 032 296
- US-A- 3 054 578
- US-A- 3 442 469

## Description

The present invention relates to a flying saucer comprising a system for controlling horizontal trim of said flying saucer.

In particular, the present invention has been designed to be applied on aircraft and dirigibles having a disc shape (flying saucer), with a circular and/or polygonal plan shape, used for any possible use, such as for example in the telecommunications sector, geothermal data collection, as a high-flying scientific laboratory, goods transport and/or personnel transport, etc.

A flying saucer, during flight, exhibits high instability due to the ways in which aerodynamic actions act on the shape thereof. These aerodynamic actions cause significant disturbances, which can alter the horizontal flying trim of the flying saucer. Air draughts even of modest entity striking a side of the flying saucer tend to raise the flying saucer, causing it to incline with even a risk of overturning.

This type of problem is well known and over time various types of systems have been developed, designed to stabilise flying saucers.

To obviate these problems recourse has been made to various solutions, sometimes even applied simultaneously. Primarily the craft has been made heavier under the aerodynamic thrust centre of the aircraft, such as to make an intrinsic improvement to the equilibrium of the system.

Further, electromechanical motors and/or command systems have been adopted for re-establishing the equilibrium.

The first intervention, however, causes an aerodynamic and operative limitation of the system, constituted by the presence of considerably-large support structures of the concentrated mass of the craft.

The second intervention, by the use of electromechanically driven systems and/or motors, exhibit other limitations, such as a delay in activation with respect to the intrinsic times of unbalancing events, which is a constant in all electromechanicallyactivated systems. The use of motors has often been shown to be insufficient and/or unsatisfactory as regards the excessive weight, the power of the motors or the mass of the batteries installed.

Also known is the possibility of controlling aircrafts (independently of the nature thereof) by means of aerodynamic appendages such as flaps, slats or tabs. In particular, these appendages have historically been used to increase the hovering capacity at low speed of airplanes, or to increase the lift force for use at high altitudes.

Also known are actuated devices that can alter their configuration according to speed and operating conditions.

In any case, all these devices, which are solutions in traditional aircrafts, exhibit inertia of intervention that is generally too high with respect to the speed of fluctuation, and for this reason they are not able to re-establish the situation of stability rapidly and effectively.

US 3442469 discloses a disk-shaped vertical take-off and landing aircraft having a centrally arranged fan chamber, a plurality of radially arranged trunk ducts for conducting pressured air outwardly toward the circular periphery of the aircraft, and including at the outer end of each trunk duct a pair of vertically spaced thrust nozzles. One nozzle is a lift nozzle for projecting air downwardly, the other nozzle is a forward thrust nozzle for projecting air rearwardly and for propelling the aircraft forwardly in flight.

In this context, the technical task at the base of the present invention is to provide a control system for controlling horizontal trim of a flying saucer which obviates the drawbacks in the prior art as described above.

In particular, an object of the present invention is to provide a control system for controlling horizontal trim able to guarantee stability of the flying saucer.

A further object of the present invention is to provide a control system for controlling horizontal trim able to instantly return the flying saucer to stability.

The set technical task and the set objects are substantially attained by a flying saucer comprising a control system for controlling horizontal trim of the flying saucer, comprising the technical features set down in one or more of the accompanying claims.

Further features and advantages of the present invention will more clearly emerge from the indicative and therefore not limiting description of the control system for controlling horizontal trim of a flying saucer, as illustrated in the accompanying drawings, in which:
figure 1 is a plan view of a flying saucer to which the control system of the horizontal trim of the present invention is associated;
figure 2 is a frontal view of the flying saucer illustrated in figure 1;
figure 3 illustrates a flying saucer comprising a first embodiment of the control system of the horizontal trim according to the present invention;
figure 4 is a frontal schematic view of the control system according to the first embodiment illustrated in figure 3;
figure 5 shows a flying saucer comprising a second embodiment of the control system according to the present invention, in a first assembly and operating variant thereof;
figure 6 shows a flying saucer comprising the second embodiment of the control system according to the present invention, in a second assembly and operating variant thereof;
figure 7 is a frontal schematic view of the control system of the second embodiment;
figure 8 shows a flying saucer comprising a third embodiment of the control system according to the present invention, in a first assembly and operating variant thereof;
figure 9 shows a flying saucer comprising a third embodiment of the control system according to the present invention, in a second assembly and operating variant thereof.

With particular reference to the accompanying figures, 1 generally denotes a flying saucer comprising a horizontal trim control system 2 according to the present invention.

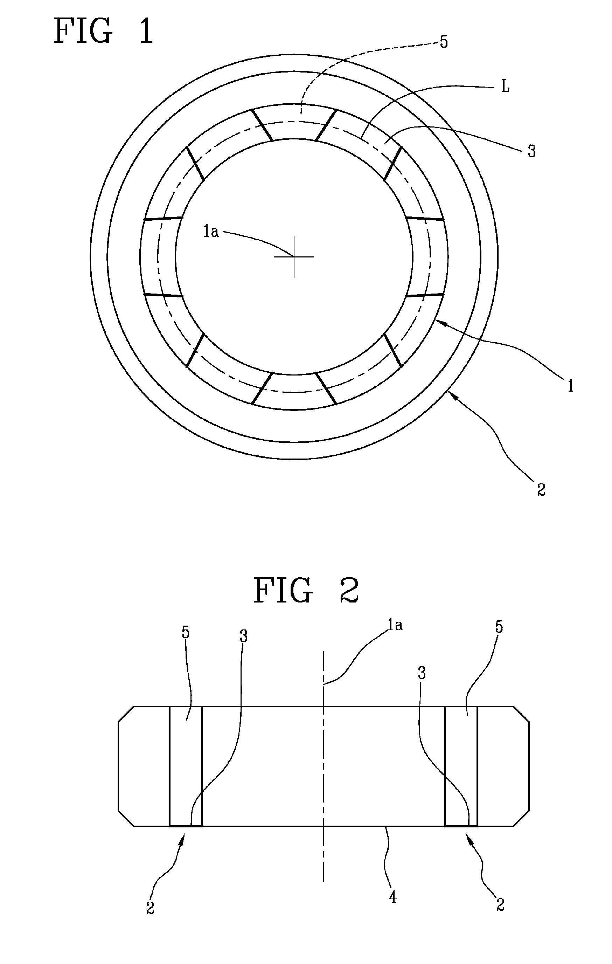

In the accompanying figures, in particular in figures 1-3, 5 and 6, an example of a particular flying saucer is shown, to which the control system of the invention can be effectively associated.

The flying saucer may exhibit a continuous space 5, which extends over the whole height of the flying saucer.

Alternatively, the space 5 can be segmented into a series of channels that extend over the whole height of the flying saucer.

In the remainder of this description the concept of the space 5 constitutes equal and implicit reference to either a continuous space or a segmented space.

The control system according to the present invention is suitable for being mounted on any flying saucer, with or without a space 5.

The presence of the intermediate space between two bodies of the hull reduces the thrust acting on the aircraft by reducing the average dynamic pressure because of a lower exposed surface.

The distribution of the unbalancing thrust can be altered with a suitable partial opening and closing of the space 5.

It is well-known that any change in speed and/or relative inclination between the flying saucer and the wind direction can cause displacement of the centre of aerodynamic thrust, generating a destabilizing momentum. The system 2 intervenes producing autonomously and automatically the torque which tends to re-balance the aircraft.

In this case the proposed system 2 intervenes, when activated, by generating, together with the gravitational force, an opposite momentum that tends to return the thrust centre to the original position thereof and, therefore, to provide an active contribution to the immediate restoration of the flight trim.

The horizontal trim control system 2 of the flying saucer comprises a plurality of movable and self-balancing appendages 3, hereinafter referred-to for simplicity as "vanes", which are selectively movable in response to a variation in the horizontal trim of the aircraft.

In other words, when the aircraft is in cruise mode, the vanes 3 are preferably in the closed condition.

When the aircraft is in cruise mode, the vanes 3 are preferably all in the same position relative to the axis of the flying saucer.

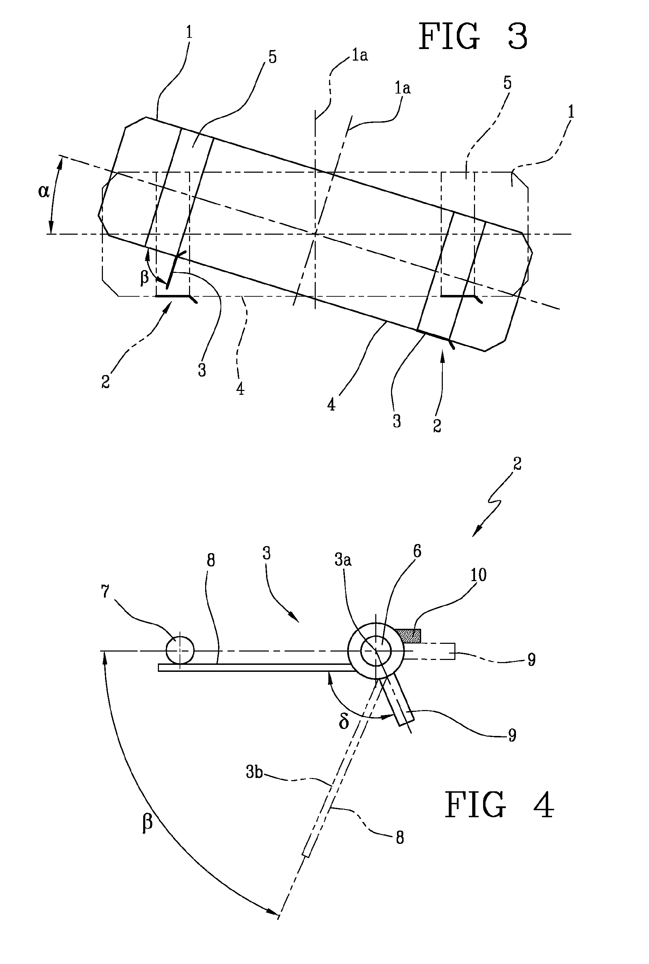

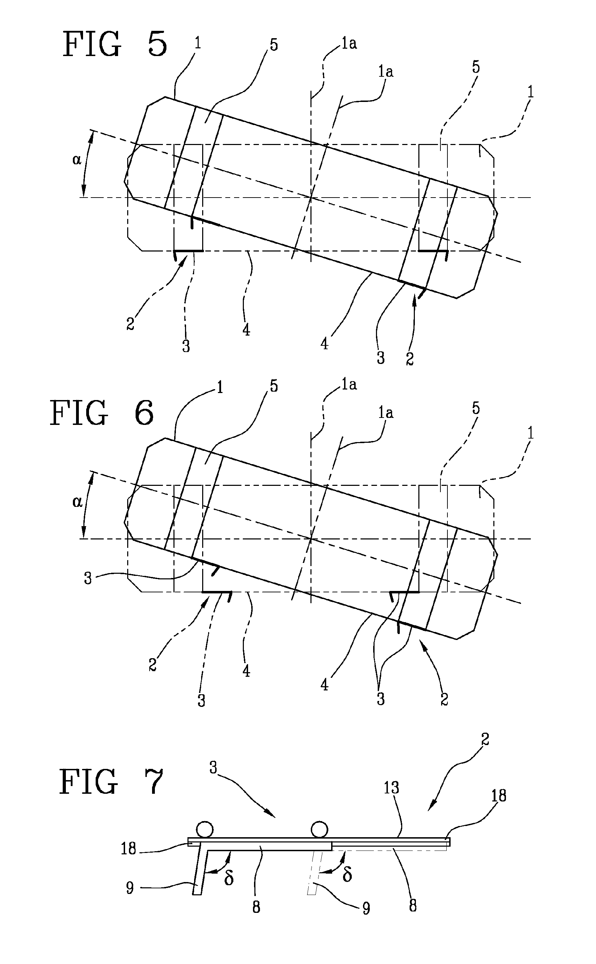

This is the rest configuration that is realized in the configurations illustrated in figures 3 and 5. Figure 6, on the contrary, illustrates a different configuration which shows the vanes 3 in response to a destabilizing action.

The different configuration of figure 6 illustrates the vanes 3 in the open position in which the space 5 is open during cruise mode.

In particular, the movement of the vanes 3 occurs in a passive manner without any intervention of an electronic type or with feedback control. The movement of the vanes, in fact, is determined only by the force of gravity, as an immediate response to the alteration that caused the instability.

Especially in the vanes 3, a system can be provided that is integrated with the system 2 and regulates and/or limits the activation sensitivity of the vanes in order to reduce the effect of possible false signals.

The vanes introduce a passive dynamic re-balancing system in the flying saucer: any alteration of the horizontal trim that is greater than a predetermined sensitivity, and due to any cause, triggers the activation of the system 2, completely passive, to oppose the action that generates the alteration of the trim.

The vanes are arranged along a circular path that is concentric with the vertical axis of the flying saucer. In other words, the vanes are arranged along a planimetric line L of the plan of the flying saucer, internally of the base of the flying saucer or along the perimeter.

The vanes may or may not be used in order to increase the effectiveness, to open and close a space and/or multiple channels having the purpose of enabling outflow of air.

Figures 1-6 illustrate a first and a second embodiment of the control system 2, which will hereinafter be described in functional detail.

In particular, these two embodiments, the second of which is illustrated in two different constructional variants, comprise movable vanes 3 that can be positioned on the bottom base 4 of the flying saucer.

The bottom base 4 of the flying saucer 1, shown in figures 2, 3, 5 and 6, is, in horizontal trim thereof, symmetrical with respect to the vertical axis, since the space 5 is closed by the movable vanes 3.

Following a gust of wind, especially if having at least a small vertical component, the flying saucer 1 becomes unstable as a result of the displacement of its centre of aerodynamic thrust and tends to assume an inclined attitude, which can even extend to the extreme case of overturning. In the absence of any system for trim control, the aircraft would tend to flip over as a result of any perturbation.

In the presence of the control system 2 according to the present invention, this does not happen because, as soon as the flying saucer tilts by an angle greater than the preset sensitivity of the system, the vanes 3, under the effect of their own inertia and/or the force of gravity, and depending on the particular case and design modalities, move and thus produce an alteration in the aerodynamic conformation of the flying saucer so as to generate an action that is contrary to the imbalance and thus automatically obtain corrections of trim and restoration of the conditions of stability.

With particular reference to figures 3 and 5, the higher-located vanes 3 tend to open while those lower down are blocked. The point of application of the centre of thrust tends to return to its original position, generating a momentum, together with the balancing gravitational force which remains positioned in the centre of mass. If the mass of the vanes is negligible compared to the total mass of the system, the centre of mass remains virtually unaltered. This generates a torque that tends to return the flight trim into the default configuration, providing a first response to the destabilizing actions and thus contributing to restoring the conditions of stability. There are various mechanisms by which the generation of this torque can be attained.

A first mechanism, shown in figures 3 and 4, provides tilting vanes 3, that can be hinged about a hinge axis 3a to the base 4 of the flying saucer.

The vanes 3 are advantageously constantly (unless there is a predetermined sensitivity of the system) in dynamic equilibrium with the applied forces, and thus remain stationary in the presence of destabilizing events. Should there be a variation in the trim that reaches beyond a given tolerance predetermined during the design stage and depending on the predetermined applications, selective movements of some vanes 3 are generated with respect to the hull, in a similar way to the arms of a scales. The tilting vane 3 can thus rotate about a rotation axis, with respect to a first position of stable static equilibrium, in which the vane 3 is parallel to the base of the flying saucer and closes the space 5, and a second perturbed position, in which it is inclined with respect to the base 4 of the flying saucer with which it forms an angle β.

In the first position, which can be defined as the rest position, the vane 3 is aligned with the bottom of the flying saucer and, in the absence of significant variations in terms of speed and wind direction, is maintained in a condition of dynamic equilibrium with the flying saucer.

In the second position, however, a relative inclination is realised between the flying saucer 1 and the vane 3, which causes the partial or total opening of some vanes, proportional to the variation of intensity and dependent on the wind direction. This system can be enhanced in its effectiveness by the presence of a space and/or channels between the part with openings on the lower and upper plane of the flying saucer, such as to allow outflow of the air and consequently to significantly reduce the variation in unbalancing dynamic pressure. This opening will enable a part of the space and/or channels to be opened, depending on the direction and intensity of the unbalancing action.

Following a gust of wind, in fact, the flying saucer tilts, causing the opening, even partial, and variable with the position, of some of vanes in the half which is raised, thus also facilitating the closure of the vanes in the lower part, which remain closed. The new configuration (profile of the flying saucer inclined by an angle α in figure 3) shows that the vanes 3 rotate about the axis 3a.

Figure 4 shows a detail of figure 3, which illustrates a tilting vane 3 as seen from a reference system located on the flying saucer. Figure 4 shows the sections on a circumferential plane of a hinge body 6 and an end-stroke body 7 interacting with the vane 3. The construction methods of the hinges and the end-stroke depend in the specific case on the building technologies adopted for the flying saucer. In particular, the tilting vanes 3 are constrained to the hinge bodies 6 and are limited in rotation by respective end-stroke bodies 7 which act as stops for the corresponding vanes 3 in their rest positions, thus preventing each vane 3 from hurting, and/or becoming obstructed by, the aircraft hull.

The vane 3 is a movable aerodynamic appendage which comprises a plate-shaped element 8 that in stationary or slightly disturbed flight conditions remains parallel to the bottom of the flying saucer, resting on the end-stroke body 7, and a tab 9 aimed at facilitating rotation of the system through the generation of an aerodynamic torque.

The plate-shaped element 8, which materially closes or opens the space 5, forms a preferably-obtuse constant angle δ.

The plate-shaped element 8 interferes against the end-stroke body 7 which acts as a stop when the vane 3 is in the first rest position in which it closes the space 5, while the tab 9 abuts against a further stop element 10 when the vane 3 is in the second maximum open position in response to perturbation.

In case of presence of a space or a channel system, with the inclination of the flying saucer, when a predetermined value of sensitivity has been exceeded (which can also be negligible), due to its own inertia, to the friction in the hinges and/or possible regulating mechanisms of the friction in the hinges, the vane 3 tends to move from the initial equilibrium position after a predetermined delay with respect to rotation of the aircraft hull. In this way it spontaneously detaches from the end-stroke body 7 and opens a flow access to the flow of air between the aircraft and the vane 3 itself. This air-flow tends to increase the opening of the vane. This is true both in the presence or absence of spaces or channels. In the presence of spaces or channels the fluid can find an escape route upwards in the area raised by the wind towards the upper part of the hull, which is subject to a lower overall pressure (composition of the static and dynamic component). In this way the presence of the wind, which strikes the inner surface 3b of the vane, contributes to increasing the passage up to bringing the vane 3 into the completely-open second position. The rotation movement is limited by the above-mentioned stop element 10 and passively regulated by elementary or elastic mechanical actions (springs or constrained masses) during opening thereof up to a maximum opening in which the tab 9 does not reach its rotational stopping point.

The horizontal component of the wind strikes the inner surface 3b of the vane 3 (or of the plate 8) generating a downwards vertical component of the force, i.e. in the opposite direction to the rising aircraft, and thus adds a further rebalancing element.

Instead, the lower part of the space 5 remains closed causing a dissymmetry with respect to the centre of pressure that has thus been moved downwards.

In this way a momentum is formed, which counteracts the force that produced the inclination, and which rebalances the system. This may also create sufficient time for intervention of the engines, if any are present.

A second mechanism also exists, which instead necessarily requires the presence of a space and/or channels, able to generate an automatic and aerodynamic re-balancing of the trim of a disc-shaped system. This mechanism includes sliding vanes 3, as shown in figures 5, 6, 8 and 9.

The vanes 3, slidable inside special guides, can be applied to flying saucers provided with cylindrical spaces (figures 5 and 6) or not equipped with cylindrical spaces.

With reference to figure 5, in cruise mode the vanes 3 are parallel to the base 12 of the flying saucer and close the space 5.

The vane 3 can slide parallel to the base 4 of the flying saucer along a suitable guide 13, provided at longitudinal ends thereof with two transversal stop elements 18 which limit the stroke of the vane 3. Following perturbation, the aircraft tilts causing the downward sliding of the vanes 3 which are located higher up, i.e. towards the vertical central axis of the aircraft; this causes the opening of the space 5 in the higher part thereof, opening a passage to the flow of air, while it remains blocked in the lower part.

In figure 6, on the other hand, a variant of the mechanism just described and shown in figure 5 is illustrated. In this case, the sliding occurs in the opposite direction, i.e. the vanes 3 leave the space 5 open during the non-perturbed cruise mode, while they close part of the space 5 following perturbation. Following the perturbation, in fact, the aircraft tilts and causes the downward sliding of the lower vanes 3, i.e. towards the outside of the aircraft; this causes the closure of the space 5 in its lower part and opens a passage to the flow of air, while it remains open in the upper part, thus creating the same disuniformity in trim with respect to the centre of pressure described with reference to what is illustrated in figure 5.

Figure 7 illustrates, in a lateral view, a vane 3 in two different positions. This sliding vane 3 is applicable, when mounted in the best-suited manner, to both operative modes as illustrated in figures 5 and 6.

As shown in figure 7, in this case too the vane 3 comprises a plate 8 which opens and closes the space, and a tab 9 which protrudes externally of the plate 8, defining there-with an angle δ, preferably obtuse. The horizontal component of the wind strikes this flap 9, generating a downwards-directed vertical component of the force, i.e. in the opposite direction to the rise of the flying saucer, thereby adding a further rebalancing element.

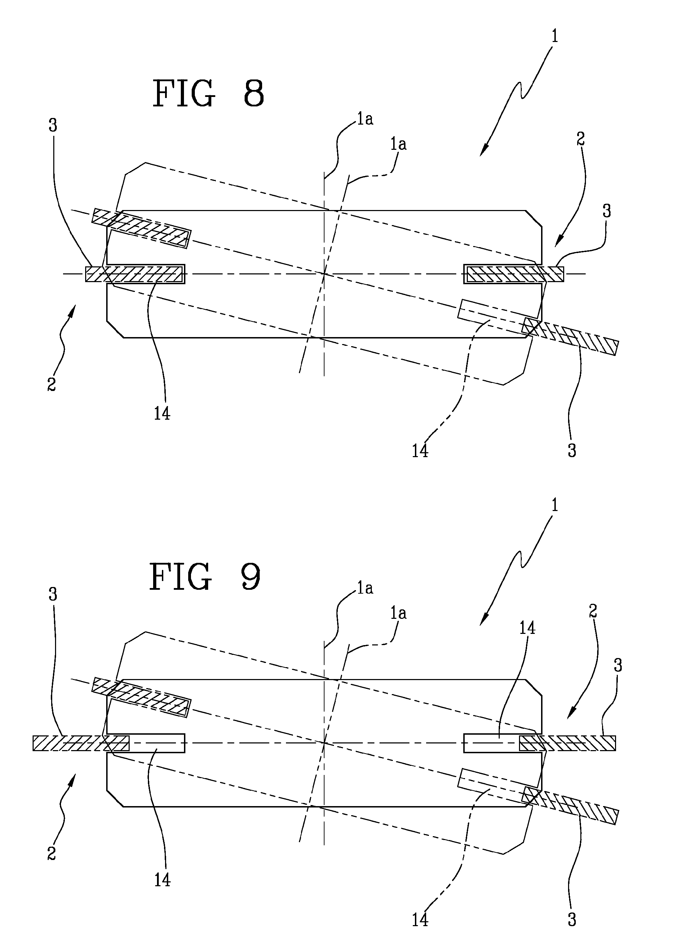

The control system, denoted by reference numeral 2, constitutes a further possible configuration of the system. It is applicable only to flying saucers which do not have the vertical cylindrical space and/or the system of channels 5. The control system 2 shown in figures 8 and 9 can be applied in two possible alternatives.

A recess 14 can be obtained along the side of the flying saucer, within which the various vanes 3 slide.

Figure 8 illustrates a first operating mode with the vanes 3 contained inside the recess 14 in the cruise mode during horizontal flight; following a perturbing event, which causes a variation in the trim of the flying saucer, the vanes 3 located lower down slide towards the outside by effect of gravity, and exit from the recess 14.

A re-balancing torque is obtained with this mode too, due to the displacement of centre of pressure.

Figure 9 shows the alternative solution in which both the vanes 3, in cruise mode, already face outwards while, when the aircraft is tilted, the upper vanes 3 fall by gravity while the lower vanes remain in an unaltered position.

The external vane 3 could also be rotated such as to increase the aerodynamic effect thereof, by simple creation of a hinged joint.

The control system 2 of the horizontal trim that includes the use of sliding vanes 3, shown in figures 5, 6, 8 and 9, can advantageously comprise mechanisms for resetting the rest configuration of the vane 3.

While in the case of the tilting vane 3 the repositioning thereof takes place following gravitational equilibrium of the vane 3, in the case of sliding vanes 3 the aid of mechanisms facilitating the repositioning may be necessary.

These mechanisms can be different and variable depending on the configurations. In any event, they all fall back on the principle of the creation of a force or a momentum that facilitates the return. Inertial systems can be provided which are operated by simple gravity, due to simple imbalance of the masses, or elastic systems actuated by elastic elements such as linear or angular springs (depending on the conformation), or systems operated by servo-controls or actuators. The choice of this typology is dependent solely on the dimensions (and therefore the entity of the forces in play) and has no correlation with the proposed stabilisation system, which is by its very nature perfectly scalable with the dimensions of the aircraft, being applicable to any dimensional scale, and any flying saucer.

The invention therefore attains the proposed objects since the horizontal trim control system having the described features facilitates restoration of the flight conditions and prevents setting off dangerous events that can also produce the tilting and the loss of control of the aircraft.

The control system of the present invention includes aerodynamic devices which, once enabled, adjust the aerodynamic shape of an aircraft, automatically and without any human intervention, so as to apply an instant reaction that is proportional to any aerodynamic disequilibrium involving changes in flight trim, including those likely to create a risk of flipping.

The system is designed to be in continuous service during cruise mode, but in case of a change in altitude requiring a tilt it can be disabled.

In all conditions and situations, the described system, when enabled, operates autonomously and automatically, producing the torque which tends to rebalance the aircraft.

Because of the action of such devices, the aerodynamic conformation of the flying saucer changes, creating a torque which tends to restore the initial condition of the horizontal trim. When the unbalancing effect ceases, the system completely passively returns to the initial position thereof.

## Claims

1. A flying saucer comprising a control system for controlling horizontal trim of said flying saucer (1), the control system comprising a plurality of horizontal vanes (3), said vanes (3) being located along a planimetric line (L) concentric with the vertical axis of the flying saucer (1), **characterized in that** said vanes (3) automatically and passively selectively move, only under the effect of their own inertia and/or the force of gravity, between a first rest configuration and a perturbed configuration, in response to an undesired variation in flight trim of the flying saucer (1).

2. A flying saucer according to claim 1, wherein said vanes (3) are arranged along an external perimeter of the flying saucer (1).

3. A flying saucer according to claim 1 or 2, wherein said vanes (3) are positioned on a bottom wall or base (4) of said flying saucer (1).

4. A flying saucer according to claim 3, wherein each vane (3) is configured to open or close a space (5), by sliding or by rotary motion, the space (5) extending over the whole height of the flying saucer (1) between parts with openings on the lower and upper plane of the flying saucer (1), such as to allow outflow of the air and consequently to reduce variation in unbalancing dynamic pressure.

5. A flying saucer according to claim 4, wherein said vanes (3) are slidably movable along a guide (13) of said bottom wall (4) for opening and closing said space.

6. A flying saucer according to claim 4, wherein said vanes (3) behave as levers hinged to the bottom wall (4) along an axis (3a) and are movable about said axis (3a).

7. A flying saucer according to any one of claims 3 to 6, wherein each vane (3) comprises a sheet-shaped element (8) and a tab (9), said tab (9) being inclined with respect to the sheet-shaped element (8) and facing externally of said flying saucer (1).

8. A flying saucer according to claim 2, wherein said vanes (3) are housed in a recess (14) arranged along the external perimeter of said flying saucer (1).

9. A flying saucer according to claim 8, wherein said vanes (3) are slidably movable between a retracted position internally of said recess (14) and a projecting position externally of said recess (14).

10. A flying saucer according to any preceding claim, and further comprising a return mechanism for bringing the vanes (3) into a respective initial position thereof.

## Patentansprüche

1. Fliegende Untertasse, umfassend ein Steuerungssystem für die Steuerung der horizontalen Lage der fliegenden Untertasse (1), wobei das Steuerungssystem eine Vielzahl von horizontalen Flügeln (3) umfasst, wobei die Flügel (3) entlang einer Lagelinie (L) angeordnet sind, die konzentrisch zur vertikalen Achse der fliegenden Untertasse (1) verläuft, **dadurch gekennzeichnet, dass** sich die Flügel (3) automatisch und passiv selektiv nur unter der Wirkung ihrer eigenen Trägheit und/oder der Schwerkraft zwischen einer ersten Ruhekonfiguration und einer gestörten Konfiguration als Reaktion auf eine unerwünschte Änderung der Fluglage der fliegenden Untertasse (1) bewegen.

2. Fliegende Untertasse nach Anspruch 1, wobei die Flügel (3) entlang eines äußeren Umfangs der fliegenden Untertasse (1) angeordnet sind.

3. Fliegende Untertasse nach Anspruch 1 oder 2, wobei die Flügel (3) an einer unteren Wand oder Basis (4) der fliegenden Untertasse (1) positioniert sind.

4. Fliegende Untertasse nach Anspruch 3, wobei jeder Flügel (3) ausgelegt ist, um durch Verschiebung oder Drehbewegung einen Bereich (5) zu öffnen oder zu schließen, wobei sich der Bereich (5) über die gesamte Höhe der fliegenden Untertasse (1) zwischen Teilen mit Öffnungen auf der unteren und oberen Ebene der fliegenden Untertasse (1) erstreckt, sodass die Abführung der Luft ermöglicht und somit die Änderung des unausgeglichenen dynamischem Drucks reduziert wird.

5. Fliegende Untertasse nach Anspruch 4, wobei die Flügel (3) entlang einer Führung (13) der unteren Wand (4) zum Öffnen und Schließen des Bereichs verschoben werden können.

6. Fliegende Untertasse nach Anspruch 4, wobei sich die Flügel (3) wie mittels eines Gelenks an der unteren Wand (4) befestigte Hebel entlang einer Achse (3a) verhalten und um diese Achse (3a) bewegt werden können.

7. Fliegende Untertasse nach einem der Ansprüche 3 bis 6, wobei jeder Flügel (3) ein blattförmiges Element (8) und eine Klappe (9) umfasst, wobei die Klappe (9) zum blattförmigen Element (8) geneigt angeordnet und extern der fliegenden Untertasse (1) zugewandt ist.

8. Fliegende Untertasse nach Anspruch 2, wobei die Flügel (3) in einer Vertiefung (14) entlang des äußeren Umfangs der fliegenden Untertasse (1) untergebracht sind.

9. Fliegende Untertasse nach Anspruch 8, wobei die Flügel (3) zwischen einer in die Vertiefung (14) eingefahrenen Position und einer ausgefahrenen Position außerhalb der Vertiefung (14) verschoben werden können.

10. Fliegende Untertasse nach einem der vorhergehenden Ansprüche, zudem umfassend einen Rückholmechanismus, um die Flügel (3) in eine jeweilige Anfangsposition zu bringen.

## Revendications

1. Soucoupe volante comprenant un système de contrôle destiné à contrôler l'assiette horizontale de ladite soucoupe volante (1), le système de contrôle comprenant une pluralité d'aubes horizontales (3), lesdites aubes (3) étant situées le long d'une ligne planimétrique (L) concentrique avec l'axe vertical de la soucoupe volante (1), **caractérisée en ce que** lesdites aubes (3) se déplacent automatiquement et passivement de façon sélective, uniquement sous l'effet de leur propre inertie et/ou de la force de gravité, entre une première configuration de repos et une configuration perturbée, en réponse à une variation intempestive de l'assiette de vol de la soucoupe volante (1).

2. Soucoupe volante selon la revendication 1, dans laquelle lesdites aubes (3) sont disposées le long d'un périmètre externe de la soucoupe volante (1).

3. Soucoupe volante selon les revendications 1 ou 2, dans laquelle lesdites aubes (3) sont positionnées sur une paroi de fond ou base (4) de ladite soucoupe volante (1).

4. Soucoupe volante selon la revendication 3, dans laquelle chaque aube (3) est configurée pour ouvrir ou fermer un espace (5) par un mouvement coulissant ou de rotation, l'espace (5) se développant sur toute la hauteur de la soucoupe volante (1) entre des parties ayant des ouvertures sur le plan inférieur et supérieur de la soucoupe volante (1), de sorte à permettre la sortie de l'air et, par conséquent, la réduction de la variation de pression dynamique déséquilibrée.

5. Soucoupe volante selon la revendication 4, dans laquelle lesdites aubes (3) peuvent se déplacer de façon coulissante le long d'un guide (13) de ladite paroi de fond (4) pour ouvrir et fermer ledit espace.

6. Soucoupe volante selon la revendication 4, dans laquelle lesdites aubes (3) se comportent comme des leviers montés articulés à la paroi de fond (4) le long d'un axe (3a) etet pouvant se déplacer autour dudit axe (3a).

7. Soucoupe volante selon l'une quelconque des revendications de 3 à 6, dans laquelle chaque aube (3) comprend une élément en forme de plaque (8) ainsi qu'une languette (9), ladite languette (9) étant inclinée par rapport à l'élément en forme de plaque (8) et orientée vers l'extérieur de ladite soucoupe volante (1).

8. Soucoupe volante selon la revendication 2, dans laquelle lesdites aubes (3) sont logées dans un renfoncement (14) disposé le long du périmètre externe de ladite soucoupe volante (1).

9. Soucoupe volante selon la revendication 8, dans laquelle lesdites aubes (3) peuvent se déplacer de façon coulissante entre une position rétractée à l'intérieur dudit renfoncement (14) et une position en saillie à l'extérieur dudit renfoncement (14).

10. Soucoupe volante selon l'une quelconque des revendications précédentes, et comprenant de plus un mécanisme de retour pour ramener les aubes (3) dans leur position initiale respective.
